(19)

Europäisches Patentamt
European Patent Office
Office européen des brevets

(11) **EP 3 341 223 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **16722648.9**

(22) Anmeldetag: **12.05.2016**

(51) Int Cl.:
*B60C 11/24* *(2006.01)*     *B60W 40/13* *(2012.01)*
*G01G 19/08* *(2006.01)*     *G01G 19/02* *(2006.01)*

(86) Internationale Anmeldenummer:
**PCT/EP2016/060612**

(87) Internationale Veröffentlichungsnummer:
**WO 2017/032466 (02.03.2017 Gazette 2017/09)**

(54) **VERFAHREN ZUM BESTIMMEN VON REIFENCHARAKTERISTISCHEN EINFLUSSGRÖSSEN, SOWIE STEUERGERÄT HIERFÜR**

METHOD FOR DETERMINING TYRE CHARACTERISTIC INFLUENCING VARIABLES AND CONTROL DEVICE THEREFORE

PROCÉDÉ POUR DÉTERMINER UNE GRANDEUR D'INFLUENCE CARACTÉRISTIQUE D'UN PNEU, ET APPAREIL DE COMMANDE À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2015   DE 102015216210**

(43) Veröffentlichungstag der Anmeldung:
**04.07.2018   Patentblatt 2018/27**

(73) Patentinhaber: **Continental Reifen Deutschland GmbH**
**30165 Hannover (DE)**

(72) Erfinder:
• **CYLLIK, Adrian**
**30159 Hannover (DE)**

• **HAHN, Carsten**
**30880 Laatzen (DE)**
• **LEHN, Michael**
**29221 Celle (DE)**
• **VOLK, Heiner**
**31535 Neustadt (DE)**

(74) Vertreter: **Widjaja, Wira**
**Continental Aktiengesellschaft**
**Patente und Lizenzen**
**Postfach 169**
**30001 Hannover (DE)**

(56) Entgegenhaltungen:
**DE-A1- 10 329 700       US-A1- 2010 186 492**
**US-A1- 2013 261 991**

EP 3 341 223 B1

**Beschreibung**

Die Erfindung betrifft ein Verfahren zum Bestimmen von reifencharakteristischen Einflussgrößen, insbesondere einer auf einen Fahrzeugreifen wirkenden Radlast oder einer Profiltiefe, sowie ein Steuergerät zur Durchführung des Verfahrens.

Es ist bekannt, an einer Reifeninnenseite eines Fahrzeugreifens ein Reifen-Sensor-Modul anzuordnen, das Kenngrößen des Fahrzeugreifens, beispielsweise einen Reifendruck oder eine Reifentemperatur bestimmen und über ein Funksignal an ein Steuergerät übermitteln kann. Weiterhin kann ein derartiges Reifen-Sensor-Modul auch eine Beschleunigung erfassen, wobei insbesondere eine Radialbeschleunigung an der Reifeninnenseite ermittelt werden kann. Aus dieser Radialbeschleunigung können neben der Ermittlung eines Bewegungszustandes des Fahrzeugreifens auch Rückschlüsse auf reifencharakteristische Einflussgrößen, beispielsweise eine auf den Fahrzeugreifen wirkende Radlast oder eine Profiltiefe eines Reifenprofils des Fahrzeugreifens getroffen werden, indem der Verlauf der Radialbeschleunigung über einen Zeitraum oder über einen durchlaufenen Abrollumfang ausgewertet wird. Nachteilig bei bisherigen Auswertemethoden ist, dass der Verlauf der Radialbeschleunigung nicht lediglich durch eine reifencharakteristische Einflussgröße beeinflusst wird, sondern durch mehrere Einflussgrößen gleichzeitig, so dass die Bestimmung der jeweiligen charakteristischen Einflussgröße ungenau wird, wenn zumindest einer der anderen Parameter nicht bekannt ist.

In US 2013/0261991 A1 und US 2010/0186492 A1 ist jeweils vorgesehen, aus analytischen Kenngrößen, die aus der Beschleunigung eines Messpunktes an einer Reifeninnenseite eines Fahrzeugreifens folgen, eine Radlast oder einen Reifendruck zu ermitteln. DE 103 29 700 A1 zeigt weiterhin, dass aus analytischen Kenngrößen, die aus der Sensorspannung eines piezoelektrischen Sensors folgen, eine Radlast oder ein Reifendruck ermittelt werden kann.

Es ist daher Aufgabe der Erfindung, ein Verfahren zum Bestimmen von reifencharakteristischen Einflussgrößen bereitzustellen, das eine hohe Genauigkeit sowie eine hohe Zuverlässigkeit bei der Bestimmung gewährleistet. Weiterhin ist Aufgabe der Erfindung, ein Steuergerät zur Durchführung des Verfahrens bereitzustellen.

Diese Aufgabe wird durch ein Verfahren nach Anspruch 1 sowie ein Steuergerät nach Anspruch 18 gelöst. Die Unteransprüche geben bevorzugte Ausführungsformen an.

Erfindungsgemäß ist demnach vorgesehen, mindestens eine den Verlauf einer erfassten Beschleunigung charakterisierende analytische Kenngröße herzuleiten und der mindestens einen analytischen Kenngröße mindestens eine reifencharakteristische Einflussgröße zuzuordnen, wobei die Zuordnung vorzugsweise eindeutig ist, d.h. es ist eine mathematische Abbildung vorgesehen, die die mindestens eine hergeleitete analytische Kenngröße eindeutig auf die mindestens eine reifencharakteristische Einflussgröße abbildet, so dass jedem Wert der mindestens einen analytischen Kenngröße genau ein Wert der mindestens einen reifencharakteristischen Einflussgröße zugeordnet werden kann. Vorzugsweise kann auch eine eineindeutige Abbildung vorgesehen sein. Dadurch wird bereits der Vorteil erreicht, dass eine genaue Bestimmung der mindestens einen reifencharakteristischen Einflussgröße über den gesamten Bereich erfolgen kann, da eine eindeutige Zuordnung vorliegt.

Als reifencharakteristische Einflussgrößen werden hierbei insbesondere eine Radlast und eine Profiltiefe verstanden. Gemäß dem erfindungsgemäßen Verfahren ist es also insbesondere möglich, beispielsweise zwei analytische Kenngrößen aus dem Verlauf der Beschleunigung zu bestimmen, wobei beide sowohl abhängig von der Profiltiefe als auch abhängig von der Radlast sind, und den beiden analytischen Kenngrößen über eine entsprechende mathematische Abbildung, beispielsweise eine Abbildungsmatrix, eine eindeutige Profiltiefe und/oder eine eindeutige Radlast zuzuordnen. Dies hat bereits den Vorteil, dass eine genaue Bestimmung der jeweiligen reifencharakteristischen Einflussgröße aus dem Verlauf der Beschleunigung möglich ist, auch dann, wenn der Verlauf der Beschleunigung im betrachteten Bereich von mehr als einer reifencharakteristischen Einflussgrößen abhängig ist. Somit kann gemäß dieser Methode der Einfluss einer bestimmten Einflussgröße auf den Verlauf der Beschleunigung kompensiert bzw. herausgerechnet werden, um somit die weitere Einflussgröße bestimmen zu können.

Erfindungsgemäß ist es auch möglich, aus dem Verlauf der Beschleunigung nur eine analytische Kenngröße herzuleiten, die vorzugsweise lediglich abhängig von der Radlast ist, d.h. auf die die Profiltiefe nahezu keinen Einfluss hat. Somit kann der analytischen Kenngröße über eine entsprechende mathematische Abbildung, d.h. über eine Kalibrier-Kurve eindeutig eine Radlast zugeordnet werden. Durch die eindeutige Zuordnung ist eine genaue Bestimmung der Radlast über den gesamten Bereich möglich, ohne dass dabei die Profiltiefe einen wesentlichen Einfluss hat.

Zum Bestimmen der analytischen Kenngröße wird zunächst eine Beschleunigung eines Fahrzeugreifens an einem Messpunkt erfasst, wobei die Beschleunigung an einer Reifeninnenseite in einem Bereich, der einem Laufstreifen des Fahrzeugreifens vorzugsweise in einer Reifenmitte bzw. einem Reifenzenit gegenüberliegt, gemessen wird, so dass eine durch eine Verformung des Fahrzeugreifens während der Berührung mit einer Fahrbahn verursachte Änderung in der Beschleunigung des Messpunktes ermittelt werden kann. Dazu kann vorzugsweise ein Reifen-Sensor-Modul verwendet werden, das auf der Reifeninnenseite angeordnet oder in die Reifeninnenseite eingelassen ist, so dass die Beschleunigung des Fahrzeugreifens an einem Messpunkt am oder im Fahrzeugreifen erfasst werden kann.

Die Beschleunigung wird hierbei über einen Zeitraum gemessen, so dass zur Bestimmung der mindestens einen analytischen Kenngröße vorzugsweise eine Kennlinie über die Zeit gebildet werden kann, aus der aus analytischen Betrachtungen die mindestens eine analytische Kenngröße folgt. Die Beschleunigungs-Kennlinie kann alternativ auch über den durchlaufenen Abrollumfang oder über den durchlaufenen Winkel des Reifen-Sensor-Moduls bzw. des Messpunktes bei einer Umdrehung des Reifens um einen bestimmten Winkel angegeben werden. Es ist aber alternativ auch denkbar, die mindestens eine analytische Kenngröße beispielsweise in einer hardwareumgesetzten, elektronischen Schaltung direkt aus der erfassten Beschleunigung herzuleiten, indem beispielsweise Werte der erfassten Beschleunigung verglichen werden, ohne dabei auf eine Kennlinie zurückzugreifen.

Der betrachtete Zeitraum bzw. der durchlaufene Abrollumfang bzw. der durchlaufene Winkel sind derartig gewählt, dass zumindest eine Abweichung in der Beschleunigung an der Reifeninnenseite, die aufgrund der Berührung des Fahrzeugreifens mit der Fahrbahn und der dadurch verursachten Verformung des Fahrzeugreifens auftritt, durch den Messpunkt erfasst wird. Somit wird die Beschleunigung innerhalb eines Betrachtungsfensters erfasst, in dem ein Krümmungsradius der Reifeninnenseite eines sich drehenden Fahrzeugreifens durch die Berührung des Fahrzeugreifens mit der Fahrbahn von einem Krümmungsradius eines nicht verformten Fahrzeugreifens abweicht. Diese Abweichung im Krümmungsradius und somit der Beschleunigung tritt insbesondere ab einem Einlauf des Fahrzeugreifens in einen Reifenlatsch bis zu einem Auslauf des Fahrzeugreifens aus dem Reifenlatsch auf, wobei sich der Krümmungsradius auch in einem Übergangsbereich kurz vor dem Einlauf und kurz nach dem Auslauf, in dem der Fahrzeugreifen die Fahrbahn nicht berührt, ändert. Unter Reifenlatsch wird hierbei eine Bodenaufstandsfläche verstanden, so dass ein Bereich gewählt wird, der etwas größer als die Bodenaufstandsfläche ist. Der gesamte Bereich aus Reifenlatsch bzw. Bodenaufstandsfläche und Übergangsbereich wird im Folgenden als Reifenlatschbereich bezeichnet.

Aus der erfassten Beschleunigung im Betrachtungsfenster wird durch analytische Betrachtungen mindestens eine den Verlauf der erfassten Beschleunigung charakterisierende analytische Kenngröße hergeleitet. Unter einer analytischen Kenngröße wird hierbei im Rahmen der Erfindung beispielsweise eine Änderung im Verlauf der erfassten Beschleunigung innerhalb des Reifenlatschbereiches und dabei vorzugsweise eine maximale, positive Änderung oder eine maximale, negative Änderung, d.h. in der Kennlinie eine maximale, positive Steigung bzw. eine maximale, negative Steigung - d.h. die mathematisch minimale Steigung - verstanden. Weiterhin kann als analytische Kenngröße ein zeitlicher Abstand oder ein Winkelabstand bzw. eine Wegdifferenz entlang des Abrollumfangs, d.h. ein vom Messpunkt zurückgelegter Winkel bzw. Weg auf dem Abrollumfang, d.h. in der Kennlinie ein x-Achsen-Abstand zwischen zwei Betrachtungspunkten verstanden werden.

Die analytische Kenngröße, die den Verlauf der erfassten Beschleunigung bzw. den Verlauf der Kennlinie charakterisiert, folgt somit erfindungsgemäß aus dem innerhalb eines Reifenlatschbereiches nicht-periodischen Verhalten der erfassten Beschleunigung, d.h. periodische Eigenschaften wie beispielsweise Eigenschwingungen, Oberschwingungen oder Störschwingungen bleiben bei der Berechnung der Profiltiefe gemäß der Erfindung unberücksichtigt.

Vorzugsweise ist die mathematische Abbildung, die der mindestens einen hergeleiteten analytischen Kenngröße mindestens eine reifencharakteristische Einflussgröße, d.h. eine Profiltiefe und/oder eine Radlast zuordnet, monoton. Dabei ist erfindungsgemäß vorgesehen, dass die monotone Abbildung entweder genau einer analytischen Kenngröße, d.h. einer gemessenen, skalaren Größe, in eindeutiger Weise über einen funktionalen Zusammenhang genau eine Radlast, d.h. ebenfalls eine skalare Größe, zuordnet oder aber zwei analytischen Kenngrößen, d.h. einem Vektor von gemessenen, skalaren Größen, die beide sowohl von der Profiltiefe als auch von der Radlast abhängig sind, in eindeutiger Weise über eine Abbildungsmatrix und einem Verschiebungsvektor eine Profiltiefe und eine Radlast, d.h. ebenfalls einen Vektor mit zwei skalaren Größen, zuordnet.

Erfindungsgemäß ist hierbei eine lineare oder eine annähernd lineare Abbildung vorgesehen. D.h. bei lediglich einer gemessenen, skalaren Größe ist als lineare Abbildung beispielsweise eine lineare oder annähernd lineare Kalibrier-Kurve vorgesehen, die beispielsweise aus einer linearen Annäherung bzw. Interpolation von vorab bestimmten, diskreten Messwerten hervorgehen kann. Unter annähernd linear wird hierbei verstanden, dass die betrachtete Kalibrier-Kurve innerhalb eines Toleranzbandes um die lineare Annäherung der betrachteten Kalibrier-Kurve verläuft. Das Toleranzband entspricht hierbei einer Abweichung von weniger als 15%, vorzugsweise 5% von der linear angenäherten Kalibrier-Kurve nach oben und nach unten. Somit wird insbesondere auch eine sehr weit geöffnete Parabel oder ein schwach ansteigender exponentieller Verlauf erfasst, die jeweils linear angenähert werden können, ohne dass dabei eine Abweichung von mehr als 15%, vorzugsweise 5%, vom ursprünglichen Verlauf nach oben oder unten über den betrachteten Bereich folgt.

Im Fall eines Vektors mit zwei gemessenen, skalaren Größen wird die lineare Abbildung durch die Abbildungsmatrix und dem Verschiebungsvektor mit jeweils konstanten Elementen bestimmt. Aus dieser folgt ein Kennlinienfeld aus mehreren, linear verlaufenden sog. Iso-Linien mit gegenläufigen Steigungen, die sich jeweils an Kreuzungspunkten schneiden. Die Iso-Linien geben hierbei die möglichen Anteile der beiden reifencharakteristischen Einflussgrößen an, die bei einem festen Wert der jeweiligen analytischen Kenngröße vorliegen können. Die Kreuzungspunkte stellen somit die Lösungen eines linearen Gleichungssystems erster Ordnung dar, deren konstante Koeffizienten den konstanten Elementen der Abbildungsmatrix bzw. des Verschiebungsvektors entsprechen. Die Kreuzungspunkte spiegeln somit die möglichen Zuordnungen der beiden hergeleiteten analytischen Kenngrößen zu den beiden reifencharakteristischen Einflussgrößen durch die lineare Abbildung wieder, wobei über die beiden gegenläufigen Steigungen der Iso-Linien der Einfluss der jeweiligen reifencharakteristischen Einflussgröße auf die analytischen Kenngrößen angegeben wird.

Da eine lineare oder zumindest annähernd lineare Abbildung verwendet wird, kann die reifencharakteristische Einflussgröße im gesamten Bereich mit derselben Genauigkeit bestimmt werden. Somit ist vorteilhafterweise auch bei fast abgefahrenem Fahrzeugreifen oder im gesamten Bereich der für ein Fahrzeug relevanten Radlasten, d.h. insbesondere bei einem unbeladenen oder voll beladenem Fahrzeug, eine Bestimmung der Profiltiefe bzw. der Radlast mit hoher Genauigkeit möglich, da einer Änderung in der analytischen Kenngröße über die mathematische Abbildung eine ausreichend auflösbare Änderung in der Profiltiefe bzw. der Radlast zugeordnet werden kann. Somit kann eine profiltiefenabhängige Warnung oder eine Radlastbestimmung mit einer sehr hohen Genauigkeit und Zuverlässigkeit abgegeben werden.

Die jeweilige Abbildung, d.h. die Kalibrier-Kurve oder die Abbildungsmatrix und der Verschiebungsvektor können vorzugsweise für jeden Reifentyp vorab bestimmt und in einem Steuergerät eingespeichert werden, so dass nach der Bestimmung der analytischen Kenngröße vorzugsweise im Steuergerät eine Umrechnung auf die Radlast bzw. die Profiltiefe erfolgen kann. Es ist aber auch möglich, die Kalibrier-Kurve oder die Abbildungsmatrix sowie den Verschiebungsvektor erst während der Fahrt zu ermitteln.

Zur Bestimmung der reifencharakteristischen Einflussgrößen über die mindestens eine analytische Kenngröße können unterschiedliche Methoden zur Anwendung kommen, wobei jeder Methode jeweils eine vorzugsweise lineare oder annähernd lineare Abbildung zugrunde gelegt wird, aus der der Zusammenhang zwischen der mindestens einen analytischen Kenngröße und der mindestens einen reifencharakteristischen Einflussgröße folgt.

Gemäß einer ersten Ausführungsform bzw. Methode ist vorgesehen, den Verlauf einer erfassten Radialbeschleunigung zu betrachten, der vorzugsweise in einer Kennlinie angegeben werden kann, die die Radialbeschleunigung gemessen am Messpunkt aufgetragen über die Zeit oder den durchlaufenen Abrollumfang oder den durchlaufenen Winkel des Messpunktes angibt.

In diesem Verlauf der Radialbeschleunigung wird ein Betrachtungspunkt auf den Punkt gelegt, an dem die Radialbeschleunigung des Messpunktes am Einlauf in den Reifenlatschbereich angegeben wird, und ein weiterer Betrachtungspunkt auf den Punkt, an dem die Radialbeschleunigung am Auslauf aus dem Reifenlatsch angegeben wird. Beide Betrachtungspunkte liegen hierbei bei einem sich drehenden Reifen normalerweise auf einem relativen Hochpunkt im Verlauf der Radialbeschleunigung betrachtet über einen Reifenumlauf. D.h. eine der analytischen Kenngrößen ist gemäß dieser Methode der x-Achsen-Abstand zwischen zwei Betrachtungspunkten auf der Kennlinie, die den Verlauf der Radialbeschleunigung angibt, d.h. der zeitliche Abstand oder der Winkelabstand oder die Wegdifferenz entlang des Abrollumfangs, den der Messpunkt zwischen dem Einlauf und dem Auslauf zurücklegt.

Das Betrachtungsfenster wird somit derartig gewählt, dass die Radialbeschleunigung zumindest am Einlauf in den Reifenlatsch sowie am Auslauf aus dem Reifenlatsch erfasst werden kann.

Da nicht nur die Radlast sondern auch die Profiltiefe einen Einfluss auf den x-Achsen-Abstand zwischen den beiden gewählten Betrachtungspunkten hat, wird gemäß dieser Methode der Anteil der Profiltiefe und der Radlast an dem x-Achsen-Abstand ermittelt, d.h. zur Bestimmung der Radlast wird aus dem x-Achsen-Abstand der Teil extrahiert, der durch die aktuell vorliegende Profitiefe verursacht wird. Dies erfolgt vorzugsweise ebenfalls anhand dem Verlauf der Radialbeschleunigung, so dass der Einfluss der Profiltiefe vorteilhafterweise auch während der Fahrt, d.h. während sich der Fahrzeugreifen abnutzt und sich die Profiltiefe ändert, genau bestimmt werden kann.

Dazu wird in dem Verlauf der erfassten Radialbeschleunigung bzw. der diesen Verlauf charakterisierenden Kennlinie eine weitere analytische Kenngröße ermittelt, die ebenfalls sowohl von der Radlast als auch von der Profiltiefe abhängig ist. Dazu wird ein Betrachtungspunkt vorzugsweise auf den Punkt der Kennlinie mit der maximalen, positiven Steigung und/oder der maximalen, negativen Steigung innerhalb des Reifenlatschbereiches gelegt. Das Betrachtungsfenster wird in dem Fall also zusätzlich derartig gewählt, dass zumindest die innerhalb eines Reifenlatschbereiches maximale, positive Änderung und/oder die maximale, negative Änderung der Radialbeschleunigung erfasst werden. Ob als Betrachtungspunkt der Punkt mit der maximalen, positiven oder der maximalen, negativen Änderung bzw. Steigung gewählt wird, kann beispielsweise abhängig von der Signalgüte für einen bestimmten Reifentyp sein. Es kann auch vorgesehen sein, einen Mittelwert aus beiden Steigungen zu ermitteln und der weiteren Betrachtung zugrunde zu legen.

Zur Bestimmung der maximalen, positiven bzw. der maximalen, negativen Steigung kann vorteilhafterweise eine Ableitung, beispielsweise eine numerisch oder analytisch bestimmte Ableitung der Kennlinie nach der Zeit bzw. dem durchlaufenen Abrollumfang oder dem durchlaufenen Winkel gebildet werden. Aus dem Ordinatenwert des Hochpunktes bzw. des Tiefpunktes der Ableitung folgt der Wert der maximalen, positiven bzw. der maximalen, negativen Steigung der Kennlinie. Hierbei kann auch direkt aus der erfassten Radialbeschleunigung über beispielsweise elektronische Schaltungen die Ableitung bzw. die Änderung der Radialbeschleunigung analysiert werden, ohne dabei eine Kennlinie zu bilden.

Als eine weitere analytische Kenngröße ergibt sich somit die maximale, positive bzw. die maximale, negative Steigung bzw. Änderung der Radialbeschleunigung, die abhängig von der Profiltiefe und zumindest geringfügig auch abhängig von der Radlast ist. Alternativ kann der Betrachtungspunkt auch derartig gewählt werden, dass nicht der Punkt der maximalen, negativen bzw. maximalen, positiven Änderung in der Radialbeschleunigung bzw. in der Steigung der Kennlinie betrachtet wird, sondern ein beliebiger anderer Punkt, der beispielsweise leicht versetzt zur maximalen, negativen bzw. maximalen, positiven Änderung bzw. Steigung liegt. Wobei sich dann entsprechend andere Einflüsse von Profiltiefe bzw. Radlast ergeben.

Aus den beiden analytischen Kenngrößen kann nun der Anteil der Profiltiefe und der Radlast am x-Achsen-Abstand zwischen dem Einlauf und dem Auslauf bestimmt werden, indem den beiden hergeleiteten analytischen Kenngrößen, d.h. der maximalen, positiven oder der maximalen, negativen Änderung bzw. dem x-Achsen-Abstand, über eine lineare Abbildung, vorzugsweise eine zweidimensionale Abbildungsmatrix und einen Verschiebungsvektor mit jeweils konstanten Elementen, eine Radlast und eine Profiltiefe eindeutig zugeordnet wird. Die Abbildungsmatrix und der Verschiebungsvektor kann hierbei in Versuchen vorab für einen Reifentyp ermittelt werden, indem beispielsweise die Änderung der jeweiligen analytischen Kenngröße bei einer Variation sowohl der Radlast als auch der Profiltiefe analysiert wird, wobei für jede Iso-Linie innerhalb des Kennlinienfeldes ein fester bzw. konstanter Wert der jeweiligen analytischen Kenngröße steht.

Somit kann vorteilhafterweise sowohl die Profiltiefe als auch die auf den Fahrzeugreifen wirkende Radlast in einfacher Weise zuverlässig und mit einer hohen Genauigkeit bestimmt werden.

Gemäß einer zweiten Ausführungsform bzw. Methode wird eine Peakbreite eines Peaks in der Kennlinie, in der die Radialbeschleunigung des Messpunktes über die Zeit bzw. den durchlaufenen Abrollumfang oder den durchlaufenen Winkel des Messpunktes aufgetragen ist, betrachtet. Ein Peak ergibt sich innerhalb des Reifenlatschbereiches dadurch, dass die Radialbeschleunigung an den Messpunkten auf idealerweise Null abfällt, an denen der Fahrzeugreifen auf der Fahrbahn aufliegt und der Messpunkt somit in etwa parallel zur Fahrbahn verläuft. Die Peakbreite des Peaks kann hierbei durch eine vorzugsweise lineare Abbildung auf eine Radlast abgebildet werden, wobei der Zusammenhang aus einer vorzugsweise linearen oder annähernd linearen Kalibrier-Kurve für diese zweite Methode folgt. Die lineare Kalibrier-Kurve gilt hierbei zumindest im gesamten Bereich der für ein Fahrzeug relevanten Radlasten, d.h. insbesondere für Radlasten zwischen einem unbeladenen und einem voll beladenen Fahrzeug.

Die Peakbreite kann bestimmt werden, indem als ein Betrachtungspunkt ein Punkt auf einer abfallenden Flanke des Peaks und als ein weiterer Betrachtungspunkt ein Punkt auf einer ansteigenden Flanke des Peaks gewählt wird. Aus der Differenz der Abszissenwerte (x-Werte) beider Betrachtungspunkte, d.h. aus dem x-Achsen-Abstand folgt unmittelbar die Peakbreite, wobei für beide Betrachtungspunkte vorzugsweise derselbe Ordinatenwert (y-Wert) gewählt wird. Die analytische Kenngröße ist somit gemäß dieser zweiten Ausführungsform der x-Achsen-Abstand zwischen zwei Betrachtungspunkten, der einem zeitlichen Abstand oder einem Winkelabstand oder einer Wegdifferenz entlang des Abrollumfangs zwischen zwei Beschleunigungszuständen entspricht, wobei die Radialbeschleunigung an beiden Beschleunigungszuständen in etwa identisch ist. Das Betrachtungsfenster wird somit gemäß dieser Methode derartig gewählt, dass zumindest der durch die abfallende Radialbeschleunigung und die ansteigende Radialbeschleunigung gebildete Peak innerhalb eines Reifenlatschbereiches erfasst wird.

Die beiden Betrachtungspunkte werden vorteilhafterweise derartig gewählt, dass an einem Betrachtungspunkt die maximale, positive Steigung bzw. die maximale, positive Änderung in der Radialbeschleunigung vorliegt und an dem anderen Betrachtungspunkt die maximale, negative Steigung bzw. die maximale, negative Änderung in der Radialbeschleunigung, wobei der Ordinatenwert für beide Betrachtungspunkte insbesondere aufgrund der Dynamik des Fahrzeugreifens während der Fahrt leicht unterschiedlich sein kann. Dadurch kann vorteilhafterweise ein Einfluss der Profiltiefe auf die Peakbreite am betrachteten Ordinatenwert minimiert werden, da sich die Peakbreite bei der maximalen, positiven bzw. der maximalen, negativen Steigung mit der Profiltiefe im Idealfall nicht wesentlich verändert. Dadurch kann vorteilhafterweise Rechenaufwand gespart werden, da die Radlast auch ohne ein Kompensieren der Profiltiefe mit einer ausreichend hohen Genauigkeit zuverlässig bestimmt werden kann.

Der x-Achsen-Abstand kann hierbei vorteilhafterweise aus der Ableitung der Kennlinie, in der der Verlauf der Radialbeschleunigung aufgetragen ist, ermittelt werden, indem der x-Achsen-Abstand zwischen dem Hochpunkt der Ableitung und dem Tiefpunkt der Ableitung bestimmt wird. D.h. es wird die Differenz aus dem Abszissenwert des Hochpunktes der Ableitung und des Abszissenwert des Tiefpunktes der Ableitung gebildet. Die analytische Kenngröße kann somit auch direkt aus den Extrempunkten der Ableitung bestimmt werden, ggf. auch durch hardwareumgesetzte, elektronische Schaltungen, in denen der x-Achsen-Abstand, d.h. der zeitliche Abstand oder der Winkelabstand oder die Wegdifferenz entlang des Abrollumfangs, zwischen den Extrempunkten ermittelt wird, ohne eine Kennlinie zu verwenden.

Um Rechenaufwand zu sparen kann auch die Peakbreite bei einer Peakhöhe von vorzugsweise 50% bestimmt werden, d.h. die Radialbeschleunigung an den beiden Betrachtungspunkten entspricht in etwa 50% der Radialbeschleunigung am Hochpunkt der Kennlinie, wobei der Hochpunkt aus einem über mehrere Reifenumdrehungen gewichtet gemittelten und/oder einem nach dem Prinzip des gleitenden Mittelwertes geglätteten Verlauf der erfassten Radialbeschleunigung bestimmt wird, so dass Eigenschwingungen oder Rauschsignale bei der Festlegung der Peakhöhe keinen wesentlichen Einfluss haben. Dadurch kann vorteilhafterweise auf das Bilden der Ableitung verzichtet und der Einfluss der Profiltiefe auf die Peakbreite dennoch gering gehalten werden, so dass auch damit noch eine näherungsweise Bestimmung der Radlast zuverlässig möglich ist, ohne dass eine Kompensation der Profiltiefe zwingend nötig ist. Alternativ kann auch die Peakbreite bei einer Peakhöhe zwischen 25% und 75% betrachtet werden, wobei dann aber die Profiltiefe an Einfluss gewinnt. Allerdings kann je nach Genauigkeitsanforderungen die daraus ermittelte Radlast ohne eine Kompensation der Profiltiefe verwendet werden, wobei dann die Ungenauigkeit durch den Einfluss der Profiltiefe in Kauf genommen wird. Auch auf einer Peakhöhe unterhalb von 25% und oberhalb von 75% ist die Bestimmung der Radlast über die Peakbreite noch möglich, wobei dann der Einfluss der Profiltiefe so stark wird, dass vorteilhaferweise mit einer linearen Abbildungsmatrix und einem Verschiebungsvektor analog zur ersten Ausführungsform der Einfluss der Profiltiefe auf die Peakbreite bestimmt werden kann und somit der Anteil der Profiltiefe berechnet bzw. der Einfluss der Profiltiefe auf die Radlast kompensiert werden kann, um die genaue Radlast bestimmen zu können.

Gemäß einer dritten Ausführungsform bzw. Methode wird die Tangentialbeschleunigung betrachtet. Die Kennlinie gibt somit die Tangentialbeschleunigung des Messpunktes über die Zeit bzw. über den durchlaufenen Abrollumfang oder den durchlaufenen Winkel des Messpunktes an. Innerhalb eines Reifenlatschbereiches durchläuft die Tangentialbeschleunigung zumindest einen Hochpunkt, einen Nulldurchgang sowie einen Tiefpunkt, wobei dem x-Achsen-Abstand zwischen dem Hochpunkt und dem Tiefpunkt, d.h. der Differenz aus dem Abszissenwert des Hochpunktes und dem Abszissenwert des Tiefpunktes, über eine vorzugsweise lineare Abbildung, beispielsweise eine lineare oder annähernd linear Kalibrier-Kurve, eine Radlast zugeordnet werden kann. Der Hochpunkt und der Tiefpunkt werden hierbei vorzugsweise aus einem über mehrere Reifenumdrehungen gewichtet gemittelten und/oder einem nach dem Prinzip des gleitenden Mittelwertes geglätteten Verlauf der erfassten Tangentialbeschleunigung bestimmt, so dass Eigenschwingungen oder Rauschsignale bei der Festlegung des Hochpunktes und/oder des Tiefpunktes keinen wesentlichen Einfluss haben. Die lineare Kalibrier-Kurve gilt hierbei zumindest im gesamten Bereich der für ein Fahrzeug relevanten Radlasten, d.h. insbesondere für Radlasten zwischen einem unbeladenen und einem voll beladenen Fahrzeug.

D.h. gemäß dieser Ausführungsform wird ein Betrachtungspunkt auf den Hochpunkt und ein weiterer Betrachtungspunkt auf den Tiefpunkt der Kennlinie gelegt und der x-Achsen-Abstand bzw. der zeitliche Abstand oder der Winkelabstand oder die Wegdifferenz entlang des Abrollumfangs als analytische Kenngröße ermittelt. Das Betrachtungsfenster wird derart gewählt, dass zumindest die innerhalb eines Reifenlatschbereiches maximale und minimale Tangentialbeschleunigung erfasst wird. Der x-Achsen-Abstand wird hierbei ebenfalls nicht wesentlich durch die Profiltiefe beeinflusst, so dass eine Kompensation nicht nötig ist, und der Rechenaufwand dadurch vorteilhaferweise gering gehalten werden kann, um die Radlast mit einer hohen Genauigkeit zuverlässig bestimmen zu können.

Alternativ kann auch direkt ein zeitlicher Abstand oder der Winkelabstand oder die Wegdifferenz entlang des Abrollumfangs zwischen der maximalen und minimalen Tangentialbeschleunigung innerhalb des Reifenlatschbereiches, beispielsweise mit Hilfe von elektrischen Schaltungen, ermittelt werden, ohne eine Kennlinie aus der erfassten Tangentialbeschleunigung zu bilden.

Vorteilhafterweise können auch alle drei Methoden parallel durchgeführt werden, um beispielsweise die mit einer Methode bestimmte Radlast zu plausibilisieren oder einen gewichteten Mittelwert aus mit unterschiedlichen Methoden berechneten Radlasten bilden zu können.

In allen drei Ausführungsformen kann der Verlauf der erfassten Beschleunigung bzw. die Kennlinie vorteilhafterweise gewichtet gemittelt werden. D.h. es werden Verläufe bzw. Kennlinien über mehrere, beispielsweise zwischen 10 und 10000 Reifenumdrehungen, aufgenommen und gewichtet gemittelt. Aus dem gemittelten Verlauf bzw. der gemittelten Kennlinie werden dann der Methode entsprechend die analytischen Kenngrößen bestimmt. Dadurch können vorteilhafterweise Rauschsignale oder Unregelmäßigkeiten während eines Reifenumlaufes, die das Signal verfälschen, ausgeglichen werden; die Signalgüte und somit die Genauigkeit bei der Bestimmung der Profiltiefe bzw. der Radlast über die jeweilige Abbildung steigt. Ergänzend oder alternativ kann eine Glättung beispielsweise ein gleitender Mittelwert angewandt werden, um analog zu einem Tiefpassfilter höhere Frequenzanteile abschneiden zu können. Dadurch kann vorteilhafterweise die Signalgüte weiter verbessert werden, so dass eine Bestimmung der Profiltiefe bzw. der Radlast genauer wird.

Vorzugsweise findet die Auswertung der analytischen Kenngrößen und somit die Bestimmung der Radlast bzw. der Profiltiefe gemäß dem jeweiligen Ausführungsbeispiel außerhalb des Reifen-Sensor-Moduls statt. Das Reifen-Sensor-Modul sendet dazu lediglich die ermittelten analytischen Kenngrößen, die im Reifen-Sensor-Modul anhand der gemessenen Beschleunigungswerte, d.h. insbesondere aus der Tangentialbeschleunigung und/oder der Radialbeschleunigung bestimmt werden, an das Steuergerät, auf dem dann die Umrechnungen über die jeweiligen mathematischen Abbildungen gemäß den drei Ausführungsformen stattfinden, beispielsweise über eine entsprechende Software. Das Bestimmen von Hoch- und Tiefpunkten, Abständen oder Steigungen bzw. Änderungen erfolgt hierbei durch einfache software- oder hardwareumgesetzte Rechenoperationen auf dem Reifen-Sensor-Modul.

Um Ressourcen zu sparen, wird die Beschleunigung vorteilhafterweise lediglich über den Zeitraum bzw. das Betrachtungsfenster erfasst und im Reifen-Sensor-Modul verarbeitet, das für die jeweilige Methode relevant ist. Dadurch kann die Berechnung auf dem Reifen-Sensor-Modul effizienter durchgeführt werden, da die Beschleunigung außerhalb des Betrachtungsfensters keinen Einfluss auf die Berechnungen hat.

Vorteilhafterweise können weiterhin eine Reifentemperatur und/oder ein Reifendruck und/oder eine Radgeschwindigkeit berücksichtigt werden, die an das Steuergerät übermittelt oder auf diesem bestimmt werden können.

Diese Faktoren haben zumindest einen geringen Einfluss auf die in den einzelnen Ausführungsformen verwendeten Beschleunigungen und somit auf den Verlauf der Kennlinien und können ebenfalls anhand der vom Reifen-Sensor-Modul übermittelten Signale bestimmt werden. Das Steuergerät kann den Einfluss dieser Faktoren geeignet kompensiert, um eine genauere Bestimmung der Radlast bzw. der Profiltiefe zu ermöglichen.

Anhand von Ausführungsbeispielen soll die Erfindung im Folgenden näher erläutert werden. Es zeigen:

Fig. 1      ein Fahrzeugreifen mit einem Reifen-Sensor-Modul;

Fig. 2      eine Kennlinie für eine Radialbeschleunigung;

Fig. 2a     eine Ableitung der Kennlinie gemäß Fig. 2 zum Herleiten einer Radlast gemäß einer ersten und einer zweiten Ausführungsform;

Fig. 2b     ein Kennlinienfeld zur Bestimmung einer Radlast und einer Profiltiefe gemäß der ersten Ausführungsform;

Fig. 2c     einen Ausschnitt der Kennlinie gemäß Fig. 2 zur Bestimmung einer Radlast gemäß einer zweiten Ausführungsform;

Fig. 3      eine Kennlinie für eine Tangentialbeschleunigung zur Bestimmung einer Radlast gemäß einer dritten Ausführungsform; und

Fig. 4      Kalibrier-Kurven zur Bestimmung der Radlast gemäß der zweiten und dritten Ausführungsform.

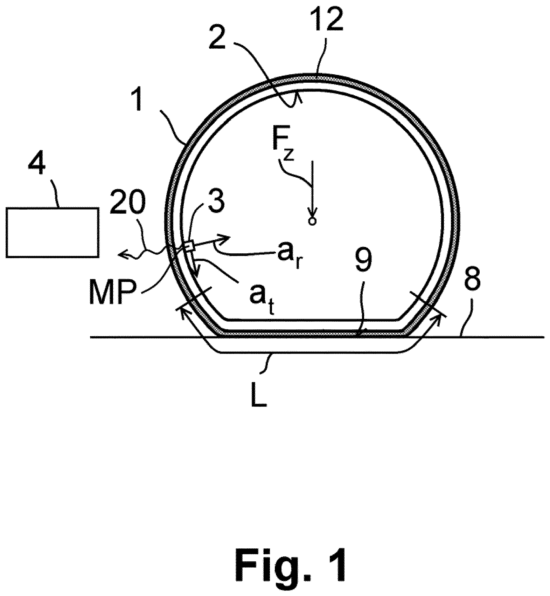

In Figur 1 ist ein Fahrzeugreifen 1 dargestellt, an dessen Reifeninnenseite 2 ein Reifen-Sensor-Modul 3 angeordnet ist. Das Reifen-Sensor-Modul 3 ist derartig angeordnet, dass über das Reifen-Sensor-Modul 3 insbesondere eine durch eine Verformung des Fahrzeugreifens 1 beeinflusste Beschleunigung eines Messpunktes MP bestimmt werden kann. Die Beschleunigung kann insbesondere eine Radialbeschleunigung $a_r$ oder eine Tangentialbeschleunigung at des Messpunktes MP sein. Das Reifen-Sensor-Modul 3 kann insbesondere analytische Kenngrößen, die aus der gemessenen Beschleunigung $a_r$, at hergeleitet werden können, beispielsweise über ein Funksignal 20 an ein Steuergerät 4 übermitteln, das die Funksignale 20 entsprechend weiterverarbeiten kann.

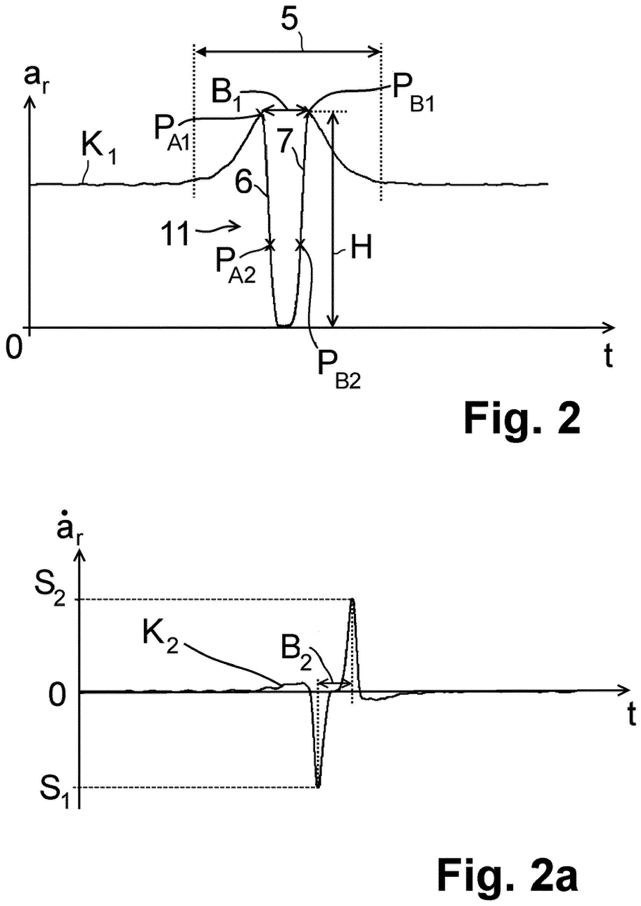

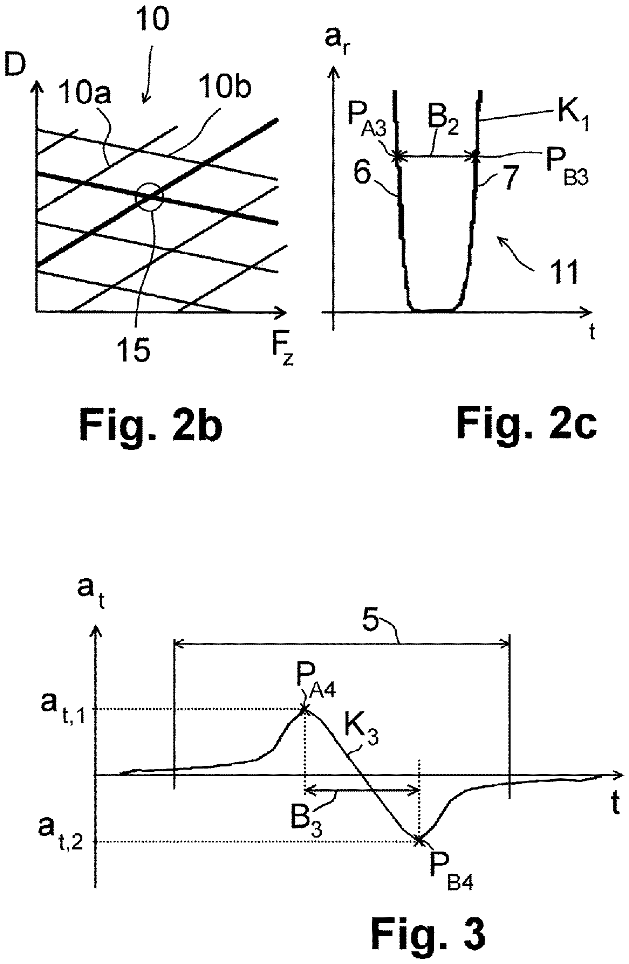

Gemäß einer ersten und einer zweiten Ausführungsform wird die Radialbeschleunigung $a_r$ betrachtet. In Fig. 2 ist dazu beispielhaft eine Kennlinie $K_1$ dargestellt, in der die vom Reifen-Sensor-Modul 3 gemessene Radialbeschleunigung $a_r$ über die Zeit t dargestellt ist. Außerhalb eines Betrachtungsfensters 5 ist die Radialbeschleunigung $a_r$ in etwa konstant. Innerhalb des Betrachtungsfenster 5 steigt die Radialbeschleunigung $a_r$ zunächst auf einen Hochpunkt an, weist dann eine abfallende Flanke 6 auf, die im Folgenden in etwa auf Null abfällt und anschließend in eine ansteigende Flanke 7 übergeht, die bis zu einem zweiten Hochpunkt ansteigt. Für größere Zeiten t fällt die Radialbeschleunigung $a_r$ wieder auf einen konstanten Wert außerhalb des Betrachtungsfensters 5 ab, wobei der genaue Verlauf abhängig von der Orientierung des Reifen-Sensor-Moduls 3 innerhalb des Fahrzeugreifens 1 ist. Das Betrachtungsfenster 5 entspricht somit gemäß diesem Beispiel einem Reifenlatschbereich L, in dem sich eine Krümmung der Reifeninnenseite 2 aufgrund der Verformung des Fahrzeugreifens 1 verändert, so dass sich auch die Radialbeschleunigung $a_r$, betrachtet an der Reifeninnenseite 2, ändert.

Die Radialbeschleunigung $a_r$ wird dann minimal, d.h. idealerweise Null, wenn sich der Messpunkt MP im Bereich einer Bodenaufstandsfläche 9 des Fahrzeugreifens 1 befindet, innerhalb derer der Fahrzeugreifen 1 eine Fahrbahn 8 berührt. Der Fahrzeugreifen 1 verformt sich im Bereich der Bodenaufstandsfläche 9 derartig, dass die Reifeninnenseite 2 in einem Bereich, der einem auf der Fahrbahn 8 aufliegenden Laufstreifen 12 des Fahrzeugreifens 1 gegenüberliegt, idealerweise parallel zur Fahrbahn 8 verläuft; die Radialbeschleunigung $a_r$ wird somit an diesen Punkten idealerweise Null.

Gemäß der ersten Ausführungsform wird zum Bestimmen mindestens einer reifencharakteristischen Einflussgröße, die gemäß dieser Ausführungsform durch eine Profiltiefe D des Fahrzeugreifens 1 und eine Radlast $F_z$ gegeben ist, als analytische Kenngröße zunächst ein x-Achsen-Abstand $B_1$ zwischen zwei Betrachtungspunkten $P_{A1}$, $P_{B1}$ auf der Kennlinie $K_1$ bestimmt. Als Betrachtungspunkte $P_{A1}$, $P_{B1}$ werden hierbei die beiden relativen Hochpunkte der Kennlinie $K_1$ gewählt, wobei der relative Hochpunkt vor der abfallenden Flanke 6 der Radialbeschleunigung $a_r$ am Einlauf in den Reifenlatsch und der relative Hochpunkt nach der ansteigenden Flanke 7 der Radialbeschleunigung $a_r$ am Auslauf aus dem Reifenlatsch eines sich drehenden Fahrzeugreifens 1 entspricht.

Der x-Achsen-Abstand $B_1$ ist sowohl abhängig von der auf den Fahrzeugreifen 1 wirkenden Radlast $F_z$ als auch von der Profiltiefe D des Fahrzeugreifens 1. Um den jeweiligen Einfluss der beiden Parameter $F_z$, D ermitteln zu können, wird zunächst eine weitere analytische Kenngröße $S_1$, $S_2$ bestimmt, die ebenfalls abhängig von der Radlast $F_z$ und der Profiltiefe D ist.

Dazu wird als analytische Kenngröße eine maximale, negative Steigung $S_1$ oder eine maximale, positive Steigung $S_2$ der Kennlinie $K_1$ innerhalb des Betrachtungsfensters 5 bestimmt, wobei die maximale, negative Steigung $S_1$ der abfallenden Flanke 6 und die maximale, positive Steigung $S_2$ der ansteigenden Flanke 7 zugeordnet ist. Dazu kann vorzugsweise eine Ableitung $K_2$ der Kennlinie $K_1$ nach der Zeit t gebildet werden, die in Fig. 2a dargestellt ist. Die maximale, negative Steigung $S_1$ bzw. die maximale, positive Steigung $S_2$ folgen dann aus einem Ordinatenwert (y-Wert) eines Tiefpunktes bzw. eines Hochpunktes der Ableitung $K_2$.

Zur weiteren Auswertung wird dazu als ein erster Betrachtungspunkt $P_{A2}$ der Punkt der Kennlinie $K_1$, dem in der Ableitung $K_2$ der geringste Ordinatenwert zugeordnet ist oder als ein zweiter Betrachtungspunkt $P_{B2}$ der Punkt der Kennlinie $K_1$, dem in der Ableitung $K_2$ der höchste Ordinatenwert zugeordnet ist, gewählt. Als analytische Kenngrößen werden die Steigungen $S_1$ bzw. $S_2$ des ersten Betrachtungspunktes $P_{A2}$ bzw. des zweiten Betrachtungspunktes $P_{B2}$ anschließend vom Reifen-Sensor-Modul 3 über das Funksignal 20 an das Steuergerät 4 übertragen, ebenso wie der ermittelte x-Achsen-Abstand $B_1$. Ob die maximale, negative Steigung $S_1$ oder die maximale, positive Steigung $S_2$ verwendet wird, kann abhängig von der Signalgüte für einen jeweiligen Reifentyp sein. Jedoch können beide Steigungen $S_1$, $S_2$ jeweils für die nachfolgenden Berechnungen herangezogen werden, ggf. auch als gewichteter Mittelwert.

Im Steuergerät 4 wird dann über eine Abbildungsmatrix M mit konstanten Elementen a, b, c, d sowie einem Verschiebungsvektor V mit reifentypischen Konstanten $C_a$ und $C_b$ den beiden analytischen Kenngrößen $S_1$ oder $S_2$ und $B_1$ eindeutig sowohl eine Profiltiefe D als auch eine Radlast $F_z$ zugeordnet. Die Zuordnung kann dabei beispielsweise die folgende Form haben:

$$\begin{bmatrix} S_1 \\ B_1 \end{bmatrix} = \begin{bmatrix} a & b \\ c & d \end{bmatrix} \cdot \begin{bmatrix} D \\ F_z \end{bmatrix} + \begin{bmatrix} C_a \\ C_b \end{bmatrix} \quad mit \ M = \begin{bmatrix} a & b \\ c & d \end{bmatrix} \ und \ V = \begin{bmatrix} C_a \\ C_b \end{bmatrix}$$

$$bzw.$$

$$\begin{bmatrix} D \\ F_z \end{bmatrix} = \left\{ \begin{bmatrix} S_1 \\ B_1 \end{bmatrix} - \begin{bmatrix} C_a \\ C_b \end{bmatrix} \right\} \cdot \begin{bmatrix} a & b \\ c & d \end{bmatrix}^{-1}$$

Analog gilt diese Zuordnung für die Steigung $S_2$. Dabei sind die Elemente a, b, c, d der Abbildungsmatrix M sowie $C_a$ und $C_b$, des Verschiebungsvektors V konstant, so dass eine lineare Abbildung vorliegt. Um die Profiltiefe D und die Radlast $F_z$ zu bestimmen sind somit lediglich die Konstanten a, b, c, d, $C_a$, $C_b$ sowie die Inverse der Abbildungsmatrix M zu bestimmen, die aus vorab durchgeführten Messungen hergeleitet werden können. Dazu kann beispielsweise die Veränderung der jeweiligen analytischen Kenngröße $S_1$, $S_2$, $B_1$ in Abhängigkeit einer Variation der Radlast $F_z$ sowie der Profiltiefe D ermittelt werden, wobei die Konstanten a, b, c, d jeweils das Maß der Veränderung angeben. Die Steigungen $S_1$, $S_2$ bzw. der x-Achsen-Abstand $B_1$ werden aus der Kennlinie $K_1$ bzw. der Ableitung $K_2$ abgelesen.

Durch diese Zuordnung wird also ein lineares Gleichungssystem erster Ordnung angegeben, das durch ein Kennlinienfeld 10 dargestellt werden kann, das in Fig. 2b zu sehen ist. Das Kennlinienfeld 10 weist parallel verlaufende Iso-Linien 10a mit einer positiven Steigung und parallel verlaufende Iso-Linien 10b mit einer gegenläufigen, negativen Steigung auf. Jede Iso-Linie 10a weist einen konstanten Wert $S_1$, $S_2$ bei Variation der Radlast $F_z$ und der Profiltiefe D auf und jede Iso-Linie 10b einen konstanten x-Achsen-Abstand $B_1$ bei Variation der Radlast $F_z$ und der Profiltiefe D. An Kreuzungspunkten 15 schneiden sich die Iso-Linien 10a, 10b, wobei die Kreuzungspunkte 15 die Lösungen des linearen Gleichungssystems angeben, so dass aus diesen Kreuzungspunkten 15 die für eine bestimmte analytische Kenngröße $S_1$ oder $S_2$ und $B_1$ ermittelte Radlast $F_z$ und Profiltiefe D folgt.

Für verschiedene Reifentypen können im Steuergerät 4 Abbildungsmatrizen M bzw. Inverse der Abbildungsmatrizen sowie Verschiebungsvektoren V gespeichert sein. Gemäß einer zweiten Ausführungsform wird der aus der abfallenden Flanke 6 und der ansteigenden Flanke 7 gebildete Peak 11 betrachtet, wobei aus einer Peakbreite $B_2$ des Peaks 11, der in Fig. 2c dargestellt ist, die Radlast $F_z$ unter Verwendung einer für dieses Ausführungsbeispiel gespeicherten Kalibrier-Kurve 10c folgt. Die Peakbreite $B_2$ wird gemäß diesem Ausführungsbeispiel an den Punkten des Peaks 11 bestimmt, an denen die maximale, negative Steigung $S_1$ bzw. die maximale positive Steigung $S_2$ vorliegt. An diesen Punkten ist die Peakbreite $B_2$ nahezu ausschließlich abhängig von der Radlast $F_z$ und der Einfluss der Profiltiefe D auf die Peakbreite $B_2$ ist unwesentlich und kann je nach Genauigkeitsanforderungen vernachlässigt werden.

Das bedeutet, es wird ein x-Achsen-Abstand, der die Peakbreite $B_2$ angibt, zwischen einem ersten Betrachtungspunkt $P_{A3}$ und einem zweiten Betrachtungspunkt $P_{B3}$ gebildet, wobei die Ordinatenwerte beider Betrachtungspunkte $P_{A3}$, $P_{B3}$ nicht zwangsläufig gleich sein müssen. Die Peakbreite $B_2$ an den Punkten der betragsmäßig maximalen Steigung $S_1$, $S_2$ können hierbei auch aus der Ableitung $K_2$ hergeleitet werden, wobei gemäß Fig. 2a die Peakbreite $B_2$

aus dem x-Achsenabstand zwischen Hochpunkt und Tiefpunkt der Ableitung $K_2$ hergeleitet werden kann.

Alternativ kann als Ordinatenwert der beider Betrachtungspunkte $P_{A3}$, $P_{B3}$ auch ein Wert gewählt werden, der in etwa 50% der Peakhöhe H oder zwischen 25% und 75% der Peakhöhe H entspricht; d.h. die Radialbeschleunigung $a_r$ ist an diesen Punkten auf ca. 50% bzw. auf zwischen 25% und 75% der Radialbeschleunigung $a_r$ an dem Hochpunkt der Kennlinie $K_1$ abgefallen, wobei der Hochpunkt aus einem über mehrere Reifenumdrehungen gewichtet gemittelten und/oder einem nach dem Prinzip des gleitenden Mittelwertes geglätteten Verlauf der erfassten Radialbeschleunigung $a_r$ bestimmt wird. Es ist auch möglich, als Ordinatenwert ein Wert zu wählen, der weniger als 25% oder mehr als 75% der Peakhöhe H entspricht. Dann ist allerdings der Einfluss der Profiltiefe D wieder zu berücksichtigen, wobei dies durch eine entsprechende Auswahl einer Abbildungsmatrix sowie eines Verschiebungsvektors, die die Einflüsse der beiden reifencharakteristischen Einflussgrößen bei der Abbildung berücksichtigen, stattfinden kann. Bei 50% kann hierbei allerdings je nach Genauigkeitsanforderungen ein Einfluss der Profiltiefe D vernachlässigt werden.

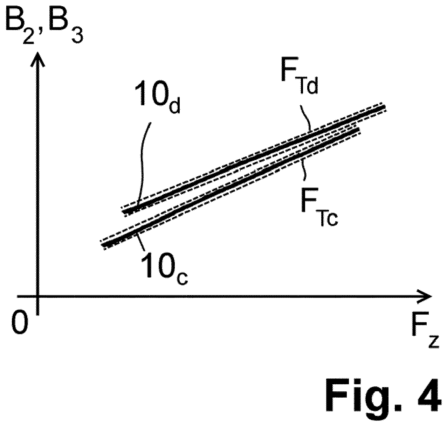

Aus der jeweiligen Peakbreite $B_2$ folgt die Radlast $F_z$ aus $F_z = F_c \times B_2 + C_c$, wobei der Faktor $F_c$ die Steigung der innerhalb eines Toleranzbandes $F_{Tc}$ liegenden Kalibrier-Kurve 10c angibt und $C_c$ eine reifentypische Konstante darstellt. D.h. die Kalibrier-Kurve 10c ordnet der Peakbreite $B_2$ in eindeutiger Weise eine Radlast $F_z$ zu, wie in Fig. 4 dargestellt. Die Radlast $F_z$ folgt dabei zumindest für die in einem Fahrzeug relevanten Radlasten $F_z$, d.h. insbesondere für Radlasten $F_z$ zwischen einem unbeladenen und einem voll beladenem Fahrzeug, aus der obigen linearen Zuordnung. Wird die Peakbreite $B_2$ nicht an den Punkten der betragsmäßig maximalen Steigung $S_1$, $S_2$ bestimmt, kann der Peakbreite $B_2$ und dem x-Achsen-Abstand $B_1$ über eine entsprechende Abbildungsmatrix eine Radlast $F_z$ und eine Profiltiefe D zugeordnet werden, wobei die Abbildungsmatrix und die Berechnung analog zum ersten Ausführungsbeispiel durchgeführt werden kann.

Gemäß einer dritten Ausführungsform, die in Fig. 3 dargestellt ist, wird die Tangentialbeschleunigung at über die Zeit t betrachtet und als Kennlinie $K_3$ aufgetragen. Diese durchläuft innerhalb des Betrachtungsfensters 5 zunächst einen Hochpunkt, hat einen Nulldurchgang und geht in einen Tiefpunkt über, wobei der genaue Verlauf abhängig von der Orientierung des Reifen-Sensor-Moduls 3 relativ zur Drehrichtung des Fahrzeugreifens 1 ist. Zur Bestimmung der Radlast $F_z$ wird als ein erster Betrachtungspunkt $P_{A4}$ zunächst der Punkt mit der höchsten Tangentialbeschleunigung $a_{t,1}$ gewählt, also der Hochpunkt der Kennlinie $K_3$ und als ein zweiter Betrachtungspunkt $P_{B4}$ der Punkt mit der niedrigsten Tangentialbeschleunigung $a_{t,2}$, d.h. der Tiefpunkt der Kennlinie $K_3$, wobei die maximale und die minimale Tangentialbeschleunigung ($a_{t,1}$, $a_{t,2}$) aus einem über mehrere Reifenumdrehungen gewichtet gemittelten und/oder einem nach dem Prinzip des gleitenden Mittelwertes geglätteten Verlauf der erfassten Tangentialbeschleunigung (at) bestimmt werden. Dem x-Achsen-Abstand $B_3$ zwischen dem ersten Betrachtungspunkte $P_{A4}$ und dem zweiten Betrachtungspunkt $P_{B4}$ kann in eindeutiger Weise durch die Kalibrier-Kurve 10d eine Radlast $F_z$ zugeordnet werden, so dass gilt: $F_z = F_d \times B_3 + C_d$, wobei $F_d$ die Steigung einer für diese dritte Ausführungsform bereitgestellten, innerhalb des Toleranzfensters $F_{Td}$ liegenden Kalibrier-Kurve 10d für die Tangentialbeschleunigung at angibt und $C_d$ eine reifentypische Konstante ist. Die Radlast $F_z$ folgt dabei zumindest für die in einem Fahrzeug relevanten Radlasten $F_z$, d.h. insbesondere für Radlasten $F_z$ zwischen einem unbeladenen und einem voll beladenem Fahrzeug, aus der obigen linearen Zuordnung.

Um die Signalgüte zu verbessern, kann zusätzlich vorgesehen sein, die Kennlinien $K_1$, $K_3$ über mehrere Umdrehungen des Fahrzeugreifens 1 gewichtet zu mitteln. In dem Fall wird dasselbe Betrachtungsfenster 5 über beispielsweise zehn Umdrehungen gewichtet gemittelt und aus der gemittelten Kennlinie $K_1$, $K_3$ gemäß dem entsprechenden Ausführungsbeispiel die Radlast $F_z$ bestimmt. Dadurch können insbesondere ein Rauschen sowie Unregelmäßigkeiten im Signalverlauf unterdrückt werden. Zusätzlich kann auch ein gleitender Mittelwert zum Glätten der Kennlinien $K_1$, $K_3$ angewandt werden.

Ergänzend können zur Verbesserung der Genauigkeit weitere Einflüsse auf die Kennlinien $K_1$, $K_3$ kompensiert werden. So haben beispielsweise ein Reifendruck p oder eine Reifentemperatur $T_R$ Einflüsse oder eine Radgeschwindigkeit $v_R$ auf die Radialbeschleunigung $a_r$ und die Tangentialbeschleunigung at. Diese können bei Kenntnis der jeweiligen Einflussgrößen vom Steuergerät 4 kompensiert werden, über im Steuergerät 4 hinterlegten Kennlinien, die den Einfluss des Reifendruckes p bzw. der Reifentemperatur $T_R$ bzw. der Radgeschwindigkeit $v_R$ beschreiben.

**Bezugszeichenliste**

| | |
|---|---|
| 1 | Fahrzeugreifen |
| 2 | Reifeninnenseite |
| 3 | Reifen-Sensor-Modul |
| 4 | Steuergerät |
| 5 | Betrachtungsfenster |
| 6 | abfallende Flanke |
| 7 | ansteigende Flanke |

| 8 | Fahrbahn |
| 9 | Bodenaufstandsfläche |
| 10 | Kennlinienfeld |
| 10a, 10b | Iso-Linien |
| 10c, 10d | Kalibrier-Kurven |
| 11 | Peak |
| 12 | Laufstreifen |
| 15 | Kreuzungspunkt |
| 20 | Funksignal |

| a, b, c, d | Elemente der Abbildungsmatrix M |
| $a_r$ | Radialbeschleunigung |
| $a_t$ | Tangentialbeschleunigung |
| $a_{t,1}$ | minimale Tangentialbeschleunigung |
| $a_{t,2}$ | maximale Tangentialbeschleunigung |
| $B_1, B_2, B_3$ | x-Achsen-Abstand/Peakbreite |
| $C_a, C_b, C_c, C_d$ | reifentypische Konstanten |
| D | Profiltiefe |
| $F_c, F_d$ | Steigung von 10c, 10d |
| $F_{Tc}, F_{Td}$ | Toleranzband in 10c, 10d |
| $F_z$ | Radlast |
| H | Peakhöhe |
| $K_1, K_3$ | Kennlinie |
| $K_2$ | Ableitung von $K_1$ |
| L | Reifenlatschbereich |
| M | Abbildungsmatrix |
| MP | Messpunkt |
| p | Reifendruck |
| $P_{Ai}, P_{Bi}$ | Betrachtungspunkt; i=1..4 |
| $S_1/ S_2$ | Änderung bzw. Steigung der Radialbeschleunigung an der abfallenden/ansteigenden Flanke 6/7 |
| t | Zeit |
| $T_R$ | Reifentemperatur |
| V | Verschiebungsvektor |
| $v_R$ | Radgeschwindigkeit |
| $K_2$ | Ableitung von $K_1$ |
| L | Reifenlatschbereich |
| M | Abbildungsmatrix |
| MP | Messpunkt |
| p | Reifendruck |
| $P_{Ai}, P_{Bi}$ | Betrachtungspunkt; i=1..4 |
| $S_1/ S_2$ | Änderung bzw. Steigung der Radialbeschleunigung an der abfallenden/ansteigenden Flanke 6/7 |
| t | Zeit |
| $T_R$ | Reifentemperatur |
| V | Verschiebungsvektor |
| $v_R$ | Radgeschwindigkeit |

## Patentansprüche

1. Verfahren zum Bestimmen einer reifencharakteristischen Einflussgröße ($F_z$, D), mit mindestens den folgenden Schritten:

a) Erfassen einer Beschleunigung ($a_r$, $a_t$) eines Messpunktes (MP) an einer Reifeninnenseite (2) eines Fahrzeugreifens (1), wobei eine durch eine Berührung des Fahrzeugreifens (1) mit einer Fahrbahn (8) verursachte Abweichung der Beschleunigung ($a_r$, $a_t$) des Messpunktes (MP) innerhalb eines Betrachtungsfensters (5) erfasst wird,

b) Herleiten mindestens einer den Verlauf der erfassten Beschleunigung ($a_r$, $a_t$) charakterisierenden analytische Kenngröße ($S_1$, $S_2$, $B_1$, $B_2$, $B_3$), wobei die mindestens eine analytische Kenngröße ($S_1$, $S_2$, $B_1$, $B_2$, $B_3$) den

**10**

innerhalb einer Reifenumdrehung nicht-periodischen Verlauf der erfassten Beschleunigung ($a_r$, at) charakterisiert,

c) Bestimmen mindestens einer reifencharakteristischen Einflussgröße ($F_z$, D) in Abhängigkeit der mindestens einen analytischen Kenngröße ($S_1$, $S_2$, $B_1$, $B_2$, $B_3$), wobei die Abhängigkeit zwischen der analytischen Kenngröße ($S_1$, $S_2$, $B_1$, $B_2$, $B_3$) und der reifencharakteristischen Einflussgröße ($F_z$, D) aus einer mathematischen Abbildung (10, 10a, 10b, 10c, 10d, M, V) folgt, wobei die mathematische Abbildung (10, 10a, 10b, 10c, 10d, M, V) der mindestens einen hergeleiteten analytischen Kenngröße ($S_1$, $S_2$, $B_1$, $B_2$, $B_3$) mindestens eine reifencharakteristische Einflussgröße ($F_z$, D) zuordnet, wobei zur Bestimmung der mindestens einen reifencharakteristischen Einflussgröße ($F_z$, D) als mathematische Abbildung

- eine Abbildungsmatrix (M) und ein Verschiebungsvektor (V) verwendet werden, wobei zur Bestimmung einer Radlast ($F_z$) und/oder einer Profiltiefe (D) als mindestens eine reifencharakteristische Einflussgröße eine Abbildungsmatrix (M) sowie ein Verschiebungsvektor (V) mit jeweils konstanten Elementen (a, b, c, d, $C_a$, $C_b$) verwendet werden, die zwei analytische Kenngrößen ($S_1$, $S_2$, $B_1$) linear auf die Radlast ($F_z$) und die Profiltiefe (D) abbilden, wobei die beiden analytischen Kenngrößen ($S_1$, $S_2$, $B_1$) jeweils abhängig von der Radlast ($F_z$) und der Profiltiefe (D) sind, oder
- eine Kalibrier-Kurve (10c, 10d) verwendet wird, wobei zur Bestimmung einer Radlast ($F_z$) als mindestens eine reifencharakteristische Einflussgröße eine Kalibrier-Kurve (10c, 10d) verwendet wird, die linear verläuft, und die Radlast ($F_z$) aus einer Multiplikation der mindestens einen analytischen Kenngröße ($B_2$, $B_3$) mit einer Steigung ($F_c$, $F_d$) der Kalibrier-Kurve (10c, 10d) unter Berücksichtigung einer reifentypischen Konstante ($C_c$, $C_d$) bestimmt wird, wobei jeder analytischen Kenngröße ($B_2$, $B_3$) jeweils eine Kalibrier-Kurve (10c, 10d) zugeordnet wird,

wobei die mathematische Abbildung (10c, 10d, M, V) die mindestens eine analytische Kenngröße ($S_1$, $S_2$, $B_1$, $B_2$, $B_3$) eindeutig auf die mindestens eine reifencharakteristische Einflussgröße ($F_z$, D) abbildet, so dass jedem Wert der mindestens einen analytischen Kenngröße ($S_1$, $S_2$, $B_1$, $B_2$, $B_3$) genau ein Wert der mindestens einen reifencharakteristischen Einflussgröße ($F_z$, D) zugeordnet wird.

2. Verfahren nach Anspruch 1, **dadurch gekennzeichnet, dass** zur Bestimmung einer Radlast ($F_z$) als mindestens eine reifencharakteristische Einflussgröße eine Kalibrier-Kurve (10c, 10d) verwendet wird, die innerhalb eines linearen Toleranzbandes ($F_{Tc}$, $F_{Td}$) verläuft, wobei das Toleranzband ($F_{Tc}$, $F_{Td}$) mit einer Abweichung von weniger als 15%, vorzugsweise 5%, um eine linearen Annäherung der Kalibrier-Kurve (10c, 10d) verläuft.

3. Verfahren nach Anspruch 1 oder 2, **dadurch gekennzeichnet, dass** die Abbildungsmatrix (M) und der Verschiebungsvektor (V) ein lineares Gleichungssystem erster Ordnung definieren, aus deren Lösung für die beiden hergeleiteten analytischen Kenngrößen ($S_1$, $S_2$, $B_1$) die Radlast ($F_z$) und die Profiltiefe (D) folgen.

4. Verfahren nach einem der vorhergehenden Ansprüche, **dadurch gekennzeichnet, dass** als mindestens eine analytische Kenngröße ($B_1$, $B_2$, $B_3$) ein zeitlicher Abstand oder ein Winkelabstand oder eine Wegdifferenz entlang des Abrollumfangs zwischen zwei Beschleunigungszuständen des Messpunktes (MP) aus der erfassten Beschleunigung ($a_r$, $a_t$) hergeleitet wird.

5. Verfahren nach Anspruch 4, **dadurch gekennzeichnet, dass** als Beschleunigungszustände eine innerhalb eines Reifenlatschbereiches (L) maximale, positive und eine innerhalb eines Reifenlatschbereiches (L) maximale, negative Änderung der Radialbeschleunigung ($a_r$) gewählt werden.

6. Verfahren nach Anspruch 4, **dadurch gekennzeichnet, dass** eine Radialbeschleunigung ($a_r$) an beiden Beschleunigungszuständen in etwa identisch ist und die Radialbeschleunigung ($a_r$) an beiden Beschleunigungszuständen einem Wert entspricht, der zwischen 25% und 75%, vorzugsweise bei 50% der innerhalb des Reifenlatschbereiches (L) maximalen Radialbeschleunigung ($a_r$) liegt, wobei die maximale Radialbeschleunigung ($a_r$) aus einem über mehrere Reifenumdrehungen gewichtet gemittelten und/oder einem nach dem Prinzip des gleitenden Mittelwertes geglätteten Verlauf der erfassten Radialbeschleunigung ($a_r$) bestimmt wird.

7. Verfahren nach Anspruch 5 oder 6, **dadurch gekennzeichnet, dass** zum Herleiten der mindestens einen analytischen Kenngröße aus der Radialbeschleunigung ($a_r$)

- aus der erfassten Radialbeschleunigung ($a_r$) eine Kennlinie ($K_1$) über die Zeit (t) oder den durchlaufenen Abrollumfang oder den durchlaufenen Winkel des Messpunktes (MP) auf dem Fahrzeugreifen (1) gebildet wird,
- auf der Kennlinie ($K_1$) zwei Betrachtungspunkte ($P_{A3}$, $P_{B3}$) ausgewählt werden,

und aus einem Abszissenabstand der zwei Betrachtungspunkte ($P_{A3}$, $P_{B3}$) eine Peakbreite ($B_2$) eines Peaks (11) in der Kennlinie ($K_1$) hergeleitet wird.

8. Verfahren nach Anspruch 7, **dadurch gekennzeichnet, dass** zum Herleiten der Peakbreite ($B_2$) eine Ableitung ($K_2$) der durch die Radialbeschleunigung ($a_r$) über die Zeit ($t$) oder den durchlaufenen Abrollumfang oder den durchlaufenen Winkel des Messpunktes (MP) auf dem Fahrzeugreifen (1) gebildete Kennlinie ($K_1$) gebildet wird.

9. Verfahren nach Anspruch 4, **dadurch gekennzeichnet, dass** als Beschleunigungszustände eine innerhalb eines Reifenlatschbereiches (L) maximale Tangentialbeschleunigung ($a_{t,1}$) und eine innerhalb des Reifenlatschbereiches (L) minimale Tangentialbeschleunigung ($a_{t,2}$) gewählt werden, wobei die maximale und die minimale Tangentialbeschleunigung ($a_{t,1}$, $a_{t,2}$) aus einem über mehrere Reifenumdrehungen gewichtet gemittelten und/oder einem nach dem Prinzip des gleitenden Mittelwertes geglätteten Verlauf der erfassten Tangentialbeschleunigung ($at$) bestimmt werden.

10. Verfahren nach Anspruch 9, **dadurch gekennzeichnet, dass** zum Herleiten der mindestens einen analytischen Kenngröße aus der Tangentialbeschleunigung ($a_t$, $a_{t,1}$, $a_{t,2}$)

- aus der erfassten Tangentialbeschleunigung ($a_t$) eine Kennlinie ($K_3$) über die Zeit ($t$) oder den durchlaufenen Abrollumfang oder den durchlaufenen Winkel des Messpunktes (MP) auf dem Fahrzeugreifen (1) gebildet wird,
- auf der Kennlinie ($K_3$) zwei Betrachtungspunkte ($P_{A4}$, $P_{B4}$) ausgewählt werden, und aus einem Abszissenabstand der zwei Betrachtungspunkte ($P_{A4}$, $P_{B4}$) ein x-Achsen-Abstand ($B_3$) innerhalb der Kennlinie ($K_3$) hergeleitet wird.

11. Verfahren nach einem der Ansprüche 4 bis 8, **dadurch gekennzeichnet, dass** als Beschleunigungszustände lokale Hochpunkte innerhalb eines Reifenlatschbereiches (L) gewählt werden.

12. Verfahren nach Anspruch 11, **dadurch gekennzeichnet, dass** eine weitere analytische Kenngröße aus einer Änderung ($S_1$, $S_2$) einer Radialbeschleunigung ($a_r$) über eine Zeit ($t$) oder den durchlaufenen Abrollumfang oder einen durchlaufenen Winkel des Messpunktes (MP) auf dem Fahrzeugreifen (1) hergeleitet wird.

13. Verfahren nach Anspruch 12, **dadurch gekennzeichnet, dass** als eine weitere analytische Kenngröße eine innerhalb eines Reifenlatschbereiches (L) maximale, negative Änderung ($S_1$) oder eine innerhalb des Reifenlatschbereiches (L) maximale, positive Änderung ($S_2$) der Radialbeschleunigung ($a_r$) über die Zeit ($t$) oder den durchlaufenen Abrollumfang oder den durchlaufenen Winkel des Messpunktes (MP) auf dem Fahrzeugreifen (1) hergeleitet wird.

14. Verfahren nach Anspruch 12 oder 13, **dadurch gekennzeichnet, dass** zum Herleiten der weiteren analytischen Kenngröße aus der Änderung ($S_1$, $S_2$) der Radialbeschleunigung ($a_r$)

- aus der erfassten Radialbeschleunigung ($a_r$) eine Kennlinie ($K_1$, $K_2$) gebildet wird,
- auf der Kennlinie ($K_1$, $K_2$) mindestens ein Betrachtungspunkt ($P_{A2}$, $P_{B2}$) ausgewählt wird, und aus dem mindestens einen Betrachtungspunkt ($P_{A2}$, $P_{B2}$) die Änderung ($S_1$, S2) der Radialbeschleunigung ($a_r$) hergeleitet wird.

15. Verfahren nach einem der Ansprüche 12 bis 14, **dadurch gekennzeichnet, dass** zum Bestimmen der Profiltiefe ($F_z$) und/oder der Radlast (D) aus den beiden analytischen Kenngrößen ($B_1$, $S_1$, $S_2$) ein eine Abbildungsmatrix (M) und einen Verschiebungsvektor (V) definierendes Kennlinienfeld (10, 10a, 10b) gebildet wird, wobei das Kennlinienfeld (10) sich kreuzende Iso-Linien (10a, 10b) aufweist, und aus Kreuzungspunkten (15) der Iso-Linien (10a, 10b) die Radlast ($F_z$) und die Profiltiefe (D) für die hergeleiteten analytischen Kenngrößen ($B_1$, $S_1$, $S_2$) folgt.

16. Verfahren nach einem der vorhergehenden Ansprüche, **dadurch gekennzeichnet, dass** der Verlauf der erfassten Beschleunigung ($a_r$, $a_t$) über mehrere Reifenumdrehungen gewichtet gemittelt wird und/oder eine Glättung des Verlaufes der erfassten Beschleunigung nach dem Prinzip des gleitenden Mittelwertes stattfindet.

17. Verfahren nach einem der vorhergehenden Ansprüche, **dadurch gekennzeichnet, dass** beim Bestimmen der mindestens einen reifencharakteristischen Einflussgröße ($F_z$, D) zusätzlich ein Einfluss eines Reifendruckes (p) und/oder einer Reifentemperatur ($T_R$) und/oder einer Radgeschwindigkeit ($v_R$) auf die erfasste Beschleunigung ($a_r$, $a_t$) des Messpunktes (MP) kompensiert wird.

**18.** Steuergerät (4) zur Durchführung des Verfahrens nach einem der vorhergehenden Ansprüche, wobei das Steuergerät (4) ausgebildet ist,

aus mindestens einer an das Steuergerät (4) übermittelten analytischen Kenngröße ($S_1$, $S_2$, $B_1$, $B_2$, $B_3$) in Abhängigkeit einer mathematischen Abbildung (10, 10a, 10b, 10c, 10d, M, V) mindestens eine reifencharakteristische Einflussgröße ($F_z$, D) zu bestimmen, wobei dazu auf dem Steuergerät (4) die Verfahrensschritte gemäß der vorstehenden Ansprüche durchgeführt werden.

**Claims**

**1.** Method for determining a tire characteristic influencing variable ($F_z$, D), having at least the following steps:

a) detecting an acceleration ($a_r$, at) of a measurement point (MP) on a tire inner side (2) of a vehicle tire (1), wherein a deviation, caused by contact of the vehicle tire (1) with a roadway (8), of the acceleration ($a_r$, $a_t$) of the measurement point (MP) within an observation window (5) is detected,

b) deriving at least one analytical characteristic variable ($S_1$, $S_2$, $B_1$, $B_2$, $B_3$) which is characteristic of the detected acceleration ($a_r$, $a_t$), wherein the at least one analytical characteristic variable ($S_1$, $S_2$, $B_1$, $B_2$, $B_3$) characterizes the non-periodic profile of the detected acceleration ($a_r$, $a_t$) within one tire rotation,

c) determining at least one tire characteristic influencing variable ($F_z$, D) in a manner dependent on the at least one analytical characteristic variable ($S_1$, $S_2$, $B_1$, $B_2$, $B_3$), wherein a mathematical mapping (10, 10a, 10b, 10c, 10d, M, V) yields the dependency between the analytical characteristic variable ($S_1$, $S_2$, $B_1$, $B_2$, $B_3$) and the tire characteristic influencing variable ($F_z$, D), wherein the mathematical mapping (10, 10a, 10b, 10c, 10d, M, V) assigns at least one tire characteristic influencing variable ($F_z$, D) to the at least one derived analytical characteristic variable ($S_1$, $S_2$, $B_1$, $B_2$, $B_3$), wherein, for the determination of the at least one tire characteristic influencing variable ($F_z$, D) as a mathematical mapping,

- a mapping matrix (M) and a shift vector (V) are used, wherein, for the determination of a wheel load ($F_z$) and/or of a profile depth (D) as at least one tire characteristic influencing variable, a mapping matrix (M) and a shift factor (V) with in each case constant elements (a, b, c, d, $C_a$, $C_b$) are used which map two analytical characteristic variables ($S_1$, $S_2$, $B_1$) linearly onto the wheel load ($F_z$) and the profile depth (D), wherein the two analytical characteristic variables ($S_1$, $S_2$, $B_1$) are in each case dependent on the wheel load ($F_z$) and the profile depth (D), or

- a calibration curve (10c, 10d) is used, wherein, for the determination of a wheel load ($F_z$) as at least one tire characteristic influencing variable, a calibration curve (10c, 10d) is used which runs linearly, and the wheel load ($F_z$) is determined from a multiplication of the at least one analytical characteristic variable ($B_2$, $B_3$) by a gradient ($F_c$, $F_d$) of the calibration curve (10c, 10d) taking into consideration a tire-specific constant ($C_c$, $C_d$), wherein each analytical characteristic variable ($B_2$, $B_3$) is assigned in each case one calibration curve (10c, 10d),

wherein the mathematical mapping (10c, 10d, M, V) maps the at least one analytical characteristic variable ($S_1$, $S_2$, $B_1$, $B_2$, $B_3$) uniquely onto the at least one tire characteristic influencing variable ($F_z$, D), such that every value of the at least one analytical characteristic variable ($S_1$, $S_2$, $B_1$, $B_2$, $B_3$) is assigned exactly one value of the at least one tire characteristic influencing variable ($F_z$, D).

**2.** Method according to Claim 1, **characterized in that**, for the determination of a wheel load ($F_z$) as at least one tire characteristic influencing variable, a calibration curve (10c, 10d) is used which runs within a linear tolerance band ($F_{Tc}$, $F_{Td}$), wherein the tolerance band ($F_{Tc}$, $F_{Td}$) runs with a deviation of less than 15%, preferably 5%, around a linear approximation to the calibration curve (10c, 10d).

**3.** Method according to Claim 1 or 2, **characterized in that** the mapping matrix (M) and the shift factor (V) define a linear first-order equation system, the solution of which for the two derived analytical characteristic variables ($S_1$, $S_2$, $B_1$) yields the wheel load ($F_z$) and the profile depth (D).

**4.** Method according to one of the preceding claims, **characterized in that**, as at least one analytical characteristic variable ($B_1$, $B_2$, $B_3$), a time interval or an angular interval or a distance difference along the rolling circumference between two acceleration states of the measurement point (MP) is derived from the detected acceleration ($a_r$, $a_t$).

**5.** Method according to Claim 4, **characterized in that** a maximum positive change of the radial acceleration ($a_r$) within

a tire contact patch region (L) and a maximum negative change of the radial acceleration ($a_r$) within a tire contact patch region (L) are selected as acceleration states.

6.  Method according to Claim 4, **characterized in that** a radial acceleration ($a_r$) in both acceleration states is approximately identical, and the radial acceleration ($a_r$) in both acceleration states corresponds to a value which lies between 25% and 75%, and is preferably 50%, of the maximum radial acceleration ($a_r$) within the tire contact patch region (L), wherein the maximum radial acceleration ($a_r$) is determined from a profile weighted and averaged over multiple tire rotations, and/or from a profile smoothed in accordance with the floating mean value principle, of the detected radial acceleration ($a_r$).

7.  Method according to Claim 5 or 6, **characterized in that**, for the derivation of the at least one analytical characteristic variable from the radial acceleration ($a_r$),

    - a characteristic curve ($K_1$) versus the time (t) or the traversed rolling circumference or the traversed angle of the measurement point (MP) on the vehicle tire (1) is formed from the detected radial acceleration ($a_r$),
    - two observation points ($P_{A3}$, $P_{B3}$) are selected on the characteristic curve ($K_1$),
    and a peak width ($B_2$) of a peak (11) in the characteristic curve ($K_1$) is derived from an abscissa spacing of the two observation points ($P_{A3}$, $P_{B3}$).

8.  Method according to Claim 7, **characterized in that**, for the derivation of the peak width ($B_2$), a derivative ($K_2$) of the characteristic curve ($K_1$) formed by the radial acceleration ($a_r$) versus the time (t) or the traversed rolling circumference or the traversed angle of the measurement point (MP) on the vehicle tire (1) is formed.

9.  Method according to Claim 4, **characterized in that**, as acceleration states, a maximum tangential acceleration ($a_{t,1}$) within a tire contact patch region (L) and a minimum tangential acceleration ($a_{t,2}$) within the tire contact patch region (L) are selected, wherein the maximum and the minimum tangential acceleration ($a_{t,1}$, $a_{t,2}$) are determined from a profile weighted and averaged over several tire rotations, and/or from a profile smoothed in accordance with the floating mean value principle, of the detected tangential acceleration ($a_t$).

10. Method according to Claim 9, **characterized in that**, for the derivation of the at least one analytical characteristic variable from the tangential acceleration ($a_t$, $a_{t,1}$, $a_{t,2}$),

    - a characteristic curve ($K_3$) versus the time (t) or the traversed rolling circumference or the traversed angle of the measurement point (MP) on the vehicle tire (1) is formed from the detected tangential acceleration ($a_t$),
    - two observation points ($P_{A4}$, $P_{B4}$) are selected on the characteristic curve ($K_3$),
    and an x-axis spacing ($B_3$) within the characteristic curve ($K_3$) is derived from an abscissa spacing of the two observation points ($P_{A4}$, $P_{B4}$).

11. Method according to one of Claims 4 to 8, **characterized in that**, as acceleration states, local high points within a tire contact patch region (L) are selected.

12. Method according to Claim 11, **characterized in that** a further analytical characteristic variable is derived from a change ($S_1$, $S_2$) in a radial acceleration ($a_r$) versus a time (t) or the traversed rolling circumference or a traversed angle of the measurement point (MP) on the vehicle tire (1).

13. Method according to Claim 12, **characterized in that**, as a further analytical characteristic variable, a maximum negative change ($S_1$) within a tire contact patch region (L), or a maximum positive change ($S_2$) within the tire contact patch region (L), of the radial acceleration ($a_r$) versus the time (t) or the traversed rolling circumference or the traversed angle of the measurement point (MP) on the vehicle tire (1) is derived.

14. Method according to Claim 12 or 13, **characterized in that**, for the derivation of the further analytical characteristic variable from the change ($S_1$, $S_2$) of the radial acceleration ($a_r$),

    - a characteristic curve ($K_1$, $K_2$) is formed from the detected radial acceleration ($a_r$),
    - at least one observation point ($P_{A2}$, $P_{B2}$) is selected on the characteristic curve ($K_1$, $K_2$), and the change ($S_1$, $S_2$) of the radial acceleration ($a_r$) is derived from the at least one observation point ($P_{A2}$, $P_{B2}$).

15. Method according to one of Claims 12 to 14, **characterized in that**, for the determination of the profile depth ($F_z$)

and/or the wheel load (D) from the two analytical characteristic variables ($B_1$, $S_1$, $S_2$), a characteristic map (10, 10a, 10b) is formed which defines a mapping matrix (M) and a shift vector (V), wherein the characteristic map (10) has intersecting iso-lines (10a, 10b), and intersection points (15) of the iso-lines (10a, 10b) yield the wheel load ($F_z$) and the profile depth (D) for the derived analytical characteristic variables ($B_1$, $S_1$, $S_2$).

16. Method according to one of the preceding claims, **characterized in that** the profile of the detected acceleration ($a_r$, at) is averaged in weighted fashion over multiple tire rotations, and/or smoothing of the profile of the detected acceleration is performed in accordance with the floating mean value principle.

17. Method according to one of the preceding claims, **characterized in that**, in the determination of the at least one tire characteristic influencing variable ($F_z$, D), an influence of a tire pressure (p) and/or of a tire temperature ($T_R$) and/or of a wheel speed ($v_R$) on the detected acceleration ($a_r$, $a_t$) of the measurement point (MP) is additionally compensated.

18. Control unit (4), for carrying out the method according to one of the preceding claims, wherein the control unit (4) is designed
to determine at least one tire characteristic influencing variable ($F_z$, D) from at least one analytical characteristic variable ($S_1$, $S_2$, $B_1$, $B_2$, $B_3$),
transmitted to the control unit (4), in a manner dependent on a mathematical mapping (10, 10a, 10b, 10c, 10d, M, V), wherein, for this purpose, on the control unit (4), the method steps according to the preceding claims are performed.


### Revendications

1. Procédé pour déterminer une grandeur d'influence ($F_z$, D) caractéristique du pneu, comprenant au moins les étapes suivantes :

    a) détection d'une accélération ($a_r$, $a_t$) d'un point de mesure (MP) au niveau d'un côté intérieur du pneu (2) d'un pneu de véhicule (1), un écart de l'accélération ($a_r$, $a_t$) du point de mesure (MP) provoqué par un contact du pneu de véhicule (1) avec une chaussée (8) étant détecté à l'intérieur d'une fenêtre d'observation (5),
    b) déduction d'au moins une grandeur caractéristique analytique ($S_1$, $S_2$, $B_1$, $B_2$, $B_3$) caractérisant l'allure de l'accélération détectée ($a_r$, $a_t$), l'au moins une grandeur caractéristique analytique ($S_1$, $S_2$, $B_1$, $B_2$, $B_3$) caractérisant l'allure non périodique de l'accélération détectée ($a_r$, $a_t$) au cours d'une rotation du pneu,
    c) détermination d'au moins une grandeur d'influence ($F_z$, D) caractéristique du pneu en fonction de l'au moins une grandeur caractéristique analytique ($S_1$, $S_2$, $B_1$, $B_2$, $B_3$), la dépendance entre la grandeur caractéristique analytique ($S_1$, $S_2$, $B_1$, $B_2$, $B_3$) et la grandeur d'influence ($F_z$, D) caractéristique du pneu résultant d'une représentation mathématique (10, 10a, 10b, 10c, 10d, M, V), la représentation mathématique (10, 10a, 10b, 10c, 10d, M, V) associant au moins une grandeur d'influence ($F_z$, D) caractéristique du pneu à l'au moins une grandeur caractéristique analytique ($S_1$, $S_2$, $B_1$, $B_2$, $B_3$) déduite,
    dans lequel, pour déterminer l'au moins une grandeur d'influence ($F_z$, D) caractéristique du pneu, on utilise, en tant que représentation mathématique

        - une matrice de représentation (M) et un vecteur de déplacement (V),
        dans lequel, pour déterminer une charge de roue ($F_z$) et/ou une profondeur de profil (D), on utilise, en tant qu'au moins une grandeur d'influence caractéristique du pneu, une matrice de représentation (M) ainsi qu'un vecteur de déplacement (V) avec à chaque fois des éléments constants (a, b, c, d, $C_a$, $C_b$), qui reproduisent deux grandeurs caractéristiques analytiques ($S_1$, $S_2$, $B_1$) linéairement sur la charge de roue ($F_z$) et la profondeur de profil (D), les deux grandeurs caractéristiques analytiques ($S_1$, $S_2$, $B_1$) dépendant à chaque fois de la charge de roue ($F_z$) et de la profondeur de profil (D), ou
        - une courbe d'étalonnage (10c, 10d), dans lequel, pour déterminer une charge de roue ($F_z$), on utilise en tant qu'au moins une grandeur d'influence caractéristique du pneu, une courbe d'étalonnage (10c, 10d) qui s'étend linéairement, et la charge de roue ($F_z$) est déterminée par multiplication de l'au moins une grandeur caractéristique analytique ($B_2$, $B_3$) avec une pente ($F_c$, $F_d$) de la courbe d'étalonnage (10c, 10d) en tenant compte d'une constante typique du pneu ($C_c$, $C_d$), une courbe d'étalonnage (10c, 10d) étant respectivement associée à chaque grandeur caractéristique analytique ($B_2$, $B_3$),
        dans lequel la représentation mathématique (10c, 10d, M, V) reproduit l'au moins une grandeur caractéristique analytique ($S_1$, $S_2$, $B_1$, $B_2$, $B_3$) de manière univoque sur l'au moins une grandeur d'influence ($F_z$, D) caractéristique du pneu, de telle sorte qu'à chaque valeur de l'au moins une grandeur caractéristique

analytique ($S_1$, $S_2$, $B_1$, $B_2$, $B_3$), on associe exactement une valeur de l'au moins une grandeur d'influence ($F_z$, D) caractéristique du pneu.

2. Procédé selon la revendication 1, **caractérisé en ce que** pour la détermination d'une charge de roue ($F_z$) en tant qu'au moins une grandeur d'influence caractéristique du pneu, on utilise une courbe d'étalonnage (10c, 10d) qui s'étend à l'intérieur d'une bande de tolérance linéaire ($F_{Tc}$, $F_{Td}$), la bande de tolérance ($F_{Tc}$, $F_{Td}$) s'étendant avec un écart inférieur à 15 %, de préférence inférieur à 5 %, d'une approximation linéaire de la courbe d'étalonnage (10c, 10d).

3. Procédé selon la revendication 1 ou 2, **caractérisé en ce que** la matrice de représentation (M) et le vecteur de déplacement (V) définissent un système d'équation linéaire de premier ordre dont la solution, pour les deux grandeurs caractéristiques analytiques ($S_1$, $S_2$, $B_1$) déduites, fournit la charge de roue ($F_z$) et la profondeur de profil (D).

4. Procédé selon l'une quelconque des revendications précédentes, **caractérisé en ce qu'**en tant qu'au moins une grandeur caractéristique analytique ($B_1$, $B_2$, $B_3$), on déduit un écart dans le temps ou un écart angulaire ou une différence de course le long de la circonférence de roulement entre deux états d'accélération du point de mesure (MP) à partir de l'accélération détectée ($a_r$, $a_t$).

5. Procédé selon la revendication 4, **caractérisé en ce qu'**en tant qu'états d'accélération, une variation de l'accélération radiale ($a_r$) maximale positive à l'intérieur d'une région d'aplatissement du pneu (L) et maximale négative à l'intérieur d'une région d'aplatissement du pneu (L).

6. Procédé selon la revendication 4, **caractérisé en ce qu'**une accélération radiale ($a_r$) dans deux états d'accélération est approximativement identique et l'accélération radiale ($a_r$) dans deux états d'accélération correspond à une valeur qui est située entre 25 % et 75 %, de préférence à 50 %, de l'accélération radiale maximale ($a_r$) à l'intérieur de la région d'aplatissement du pneu (L), l'accélération radiale maximale ($a_r$) étant déterminée à partir d'une allure moyennée de manière pondérée sur plusieurs rotations du pneu et/ou d'une allure lissée selon le principe de la valeur moyenne mobile, de l'accélération radiale détectée ($a_r$).

7. Procédé selon la revendication 5 ou 6, **caractérisé en ce que** pour déduire l'au moins une grandeur caractéristique analytique à partir de l'accélération radiale ($a_r$) :

   - on forme, à partir de l'accélération radiale détectée ($a_r$), une courbe caractéristique ($K_1$) en fonction du temps (t) ou de la circonférence de roulement parcourue ou de l'angle parcouru du point de mesure (MP) sur le pneu de véhicule (1),
   - on choisit sur la courbe caractéristique ($K_1$) deux points d'observation ($P_{A3}$, $P_{B3}$), et l'on déduit, à partir d'une distance en abscisse des deux points d'observation ($P_{A3}$, $P_{B3}$), une largeur de pic ($B_2$) d'un pic (11) dans la courbe caractéristique ($K_1$).

8. Procédé selon la revendication 7, **caractérisé en ce que** pour déduire la largeur de pic ($B_2$), on forme une dérivée ($K_2$) de la courbe caractéristique ($K_1$) formée par l'accélération radiale ($a_r$) en fonction du temps (t) ou de la circonférence de roulement parcourue ou de l'angle parcouru du point de mesure (MP) sur le pneu de véhicule (1).

9. Procédé selon la revendication 4, **caractérisé en ce que** l'on choisit en tant qu'états d'accélération une accélération tangentielle maximale ($a_{t,1}$) à l'intérieur d'une région d'aplatissement du pneu (L) et une accélération tangentielle minimale ($a_{t,2}$) à l'intérieur de la région d'aplatissement du pneu (L), les accélérations tangentielles maximale et minimale ($a_{t,1}$, $a_{t,2}$) étant déterminées à partir d'une allure moyennée de manière pondérée sur plusieurs rotations du pneu et/ou d'une allure lissée selon le principe de la valeur moyenne mobile, de l'accélération tangentielle détectée ($a_t$).

10. Procédé selon la revendication 9, **caractérisé en ce que** pour déduire l'au moins une grandeur caractéristique analytique à partir de l'accélération tangentielle ($a_t$, $a_{t,1}$, $a_{t,2}$)

   - on forme, à partir de l'accélération tangentielle détectée ($a_t$), une courbe caractéristique ($K_3$) en fonction du temps (t) ou de la circonférence de roulement parcourue ou de l'angle parcouru du point de mesure (MP) sur le pneu de véhicule (1),
   - on sélectionne sur la courbe caractéristique ($K_3$), deux points d'observation ($P_{A4}$, $P_{B4}$), et, à partir d'une distance en abscisse des deux points d'observation ($P_{A4}$, $P_{B4}$), on déduit une distance à l'axe x ($B_3$) à l'intérieur

de la courbe caractéristique ($K_3$).

**11.** Procédé selon l'une quelconque des revendications 4 à 8, **caractérisé en ce que** l'on choisit en tant qu'états d'accélération des points locaux maximaux à l'intérieur d'une région d'aplatissement du pneu (L) .

**12.** Procédé selon la revendication 11, **caractérisé en ce que** l'on déduit une grandeur caractéristique analytique supplémentaire à partir d'une variation ($S_1$, $S_2$) d'une accélération radiale ($a_r$) en fonction du temps (t) ou de la circonférence de roulement parcourue ou d'un angle parcouru du point de mesure (MP) sur le pneu de véhicule (1).

**13.** Procédé selon la revendication 12, **caractérisé en ce que** l'on déduit, en tant que grandeur caractéristique analytique supplémentaire, une variation ($S_1$) maximale négative à l'intérieur d'une région d'aplatissement du pneu (L) ou une variation ($S_2$) maximale positive à l'intérieur d'une région d'aplatissement du pneu (L), de l'accélération radiale ($a_r$) en fonction du temps (t) ou de la circonférence de roulement parcourue ou de l'angle parcouru du point de mesure (MP) sur le pneu de véhicule (1).

**14.** Procédé selon la revendication 12 ou 13, **caractérisé en ce que** pour déduire la grandeur caractéristique analytique supplémentaire à partir de la variation ($S_1$, $S_2$) de l'accélération radiale ($a_r$)

- on forme, à partir de l'accélération radiale détectée ($a_r$), une courbe caractéristique ($K_1$, $K_2$),
- on choisit sur la courbe caractéristique ($K_1$, $K_2$), au moins un point d'observation ($P_{A2}$, $P_{B2}$), et l'on déduit, à partir de l'au moins un point d'observation ($P_{A2}$, $P_{B2}$), la variation ($S_1$, $S_2$) de l'accélération radiale ($a_r$).

**15.** Procédé selon l'une quelconque des revendications 12 à 14, **caractérisé en ce que** pour déterminer la profondeur de profil ($F_z$) et/ou la charge de roue (D) à partir des deux grandeurs caractéristiques analytiques ($B_1$, $S_1$, $S_2$), on forme un champ de courbe caractéristique (10, 10a, 10b) définissant une matrice de reproduction (M) et un vecteur de déplacement (V), le champ de courbe caractéristique (10) présentant des lignes isométriques s'intersectant (10a, 10b) et à partir des points d'intersection (15) des lignes isométriques (10a, 10b), la charge de roue ($F_z$) et la profondeur de profil (D) pour les grandeurs caractéristiques analytiques ($B_1$, $S_1$, $S_2$) déduites étant obtenues.

**16.** Procédé selon l'une quelconque des revendications précédentes, **caractérisé en ce que** l'allure de l'accélération détectée ($a_r$, $a_t$) est moyennée de manière pondérée sur plusieurs rotations du pneu et/ou on effectue un lissage de l'allure de l'accélération détectée selon le principe de la valeur moyenne mobile.

**17.** Procédé selon l'une quelconque des revendications précédentes, **caractérisé en ce que** lors de la détermination de l'au moins une grandeur d'influence ($F_z$, D) caractéristique du pneu, une influence d'une pression du pneu (p) et/ou d'une température du pneu ($T_R$) et/ou d'une vitesse de roue ($v_R$) sur l'accélération détectée ($a_r$, $a_t$) du point de mesure (MP) est en outre compensée.

**18.** Appareil de commande (4) pour mettre en oeuvre le procédé selon l'une quelconque des revendications précédentes, dans lequel l'appareil de commande (4) est réalisé pour déterminer, à partir d'au moins une grandeur caractéristique analytique ($S_1$, $S_2$, $B_1$, $B_2$, $B_3$) transmise à l'appareil de commande (4), en fonction d'une représentation mathématique (10, 10a, 10b, 10c, 10d, M, V), au moins une grandeur d'influence ($F_z$, D) caractéristique du pneu, les étapes de procédé selon les revendications précédentes étant à cet effet réalisées sur l'appareil de commande (4).

**Fig. 1**

**Fig. 2**

**Fig. 2a**

## Fig. 2b

## Fig. 2c

## Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130261991 A1
- US 20100186492 A1
- DE 10329700 A1